(19) **Europäisches Patentamt**
**European Patent Office**
**Office européen des brevets**

(11) **EP 2 245 430 B1**

(12) **EUROPÄISCHE PATENTSCHRIFT**

(45) Veröffentlichungstag und Bekanntmachung des Hinweises auf die Patenterteilung:
**30.08.2017 Patentblatt 2017/35**

(51) Int Cl.:
**G01F 25/00** (2006.01)    **G01F 1/58** (2006.01)

(21) Anmeldenummer: **08717872.9**

(22) Anmeldetag: **17.03.2008**

(86) Internationale Anmeldenummer:
**PCT/EP2008/053135**

(87) Internationale Veröffentlichungsnummer:
**WO 2008/113774 (25.09.2008 Gazette 2008/39)**

(54) **VERFAHREN ZUR VORAUSSCHAUENDEN WARTUNG UND/ODER VERFAHREN ZUR BESTIMMUNG DER ELEKTRISCHEN LEITFÄHIGKEIT BEI EINEM MAGNETISCH-INDUKTIVEN DURCHFLUSSMESSGERÄT**

METHOD FOR ANTICIPATORY MAINTENANCE AND/OR METHOD FOR DETERMINING THE ELECTRIC CONDUCTIVITY OF A MAGNETIC-INDUCTIVE FLOW METER

PROCÉDÉ D'ENTRETIEN PRÉVISIONNEL ET/OU PROCÉDÉ DE DÉTERMINATION DE LA CONDUCTIVITÉ ÉLECTRIQUE D'UN DÉBITMÈTRE À INDUCTION MAGNÉTIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **22.03.2007 DE 102007014469**

(43) Veröffentlichungstag der Anmeldung:
**03.11.2010 Patentblatt 2010/44**

(73) Patentinhaber: **Endress+Hauser Flowtec AG**
**4153 Reinach (CH)**

(72) Erfinder:
• **DRAHM, Wolfgang**
**85435 Erding (DE)**

• **RUFER, Heinz**
**CH-4143 Dornach (CH)**
• **SCHMALZRIED, Frank**
**85356 Freising (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 336 615      EP-A- 1 536 211**
**DE-A1- 10 243 748    DE-A1-102005 039 223**

**Beschreibung**

Die Erfindung betrifft ein Verfahren zur vorausschauenden Wartung an einem magnetisch-induktiven Durchflussmessgerät und/oder ein Verfahren zur Bestimmung der elektrischen Leitfähigkeit eines Mediums, das das Messrohr eines magnetisch induktives Durchflussmessgerät in Richtung der Längsachse durchströmt. Ein magnetisch-induktive Durchflussmessgerät umfasst die folgenden Komponenten:

- ein Magnetsystem, das ein das Messrohr durchsetzendes, im wesentlichen quer zur Messrohrachse verlaufendes Magnetfeld erzeugt,

- zumindest zwei mit dem Medium koppelnde Messelektroden mit einem definierten Ruhepotential, die in einem im wesentlichen senkrecht zum Magnetfeld liegenden Bereich des Messrohres angeordnet sind, und

- eine Regel-/Auswerteeinheit, die anhand der in die Messelektroden induzierten Messspannung Information über den Volumen- oder Massestrom des Mediums in dem Messrohr liefert,

Entsprechende magnetisch-induktive Durchflussmessgeräte werden von der Anmelderin in einer Vielzahl von Ausgestaltungen, z.B. unter der Bezeichnung PROMAG angeboten und vertrieben.

In der DE 103 56 007 B3 wird ein magnetisch-induktives Durchflussmessgerät beschrieben, das einen Zusatznutzen liefert. Um dies zu erreichen, wird zwischen einer Messelektrode und einer Referenzelektrode oder einer Füllstandsüberwachungselektrode ein Strom eingeprägt. Die hierbei zwischen den Messelektroden anliegende Spannung wird gemessen und aus dem Verhältnis von gemessener Spannung zu eingeprägtem Strom wird ein erster Widerstandswert ermittelt. Anschließend wird die erste Messelektrode durch die zweite Messelektrode ersetzt, und die zuvor beschriebenen Verfahrensschritte werden wiederholt, wodurch einer zweiter Widerstandswert zu Verfügung steht. Durch Differenz- oder Quotientenbildung der zwei ermittelten Widerstandswerte wird eine kritische Belegung einer der beiden Messelektroden festgestellt, wenn das gebildete Verhältnis bzw. die gebildete Differenz außerhalb eines vorgegebenen Wertebereiches liegt. Nachteilig bei dieser Ausgestaltung ist, dass durch das Aufprägen eines Stroms jede der beiden Messelektroden aus dem Ruhepotential herausbewegt wird bzw. dass sich das Ruhepotential verschiebt. Um nachfolgend eine korrekte Durchflussmessung durchführen zu können, muss zugewartet werden, bis der Gleichgewichtszustand wieder erreicht ist. Da weniger Messzeit zur Verfügung steht wird die Messgenauigkeit des Durchflussmessgeräts vermindert.

Aus der EP 0 336 615 B1 ist ein elektro-magnetisches Durchflussmessgerät bekannt geworden, das es erlaubt, simultan den Durchfluss eines Mediums durch das Messrohr des Durchflussmessgeräts und die elektrische Leitfähigkeit des Mediums zu bestimmen. Das Durchflussmessgerät umfasst die in der Einleitung genannten Komponenten. Zusätzlich zu den bekannten Durchflussmessgeräten besitzt die in der EP 0 336 615 B1 offenbarte Lösung ein Mittel zum Erzeugen eines die Leitfähigkeit des Mediums repräsentierenden Leitfähigkeitssignals aus einem ebenso wie das Durchflussmesssignal von den zwei Messelektroden erzeugten Ausgangssignals. Hierzu ist zusätzlich zu dem alternierenden rechteckförmigen Erregungssignal für das Magnetsystem ein Mittel vorgesehen, das einen elektrischen Impuls erzeugt, der über eine entsprechende Steuerung jeweils zu Beginn von jedem Halbzyklus des Erregungssignals an das Magnetsystem angelegt wird.

Aus der US 6,804,613 ist ein elektromagnetischer Durchflussmesser bekannt geworden, der neben der Information über den Durchfluss auch Information über eine Leerrohrdetektion, einen an der Messelektrode haftenden Belag oder die elektrische Leitfähigkeit des durch das Messrohr strömenden Mediums ermitteln kann. Hierzu werden zwischen jeweils einer der beiden Messelektroden und einer Erdungselektrode Diagnosesignale angelegt. Die entsprechenden Diagnosesignalgeneratoren sind entweder Konstantstromversorgungen oder Konstantspannungsversorgungen, wobei die Diagnosesignalgeneratoren Wechselsignale verwenden, deren Frequenz ein ganzzahliges Vielfaches der bei der Anregungsschaltung für das Magnetsystem verwendeten Anregungsfrequenz ist. Weiterhin ist eine Diagnoseschaltung vorgesehen, die die Erregerfrequenz des Magnetsystems mit der Frequenz des Diagnosesignals synchronisiert. Insbesondere wird die Leitfähigkeit des Mediums oder die Bildung von Belag an den Messelektroden über die Messung des Widerstandes der Messelektroden oder über die Messung des Widerstandes zwischen einer Messelektrode und der Erdungselektrode bestimmt.

Nachteilig bei den bekannt gewordenen Verfahren ist, dass hier davon ausgegangen wird, dass der gemessene Widerstand der Flüssigkeit in einer eindeutigen Beziehung zu der Leitfähigkeit des Mediums steht. Im Bereich hoher Leitfähigkeiten ist der Messbereich einer Leitfähigkeitsmeßzelle durch den Phasenübergang von der Messelektrode in die Flüssigkeit beschränkt. Die Impedanz des Phasenübergangs verhält sich nur im Idealfall rein kapazitiv; im Realfall hat die Impedanz des Phasenübergangs auch einen Ohm'schen Anteil. Ist dieser Anteil gegenüber dem Ohmschen Widerstand des Mediums nicht mehr zu vernachlässigen, so wird die gemessene Leitfähigkeit des Mediums verfälscht. Folglich ist der Messbereich einer Leitfähigkeitsmesszelle nach oben entsprechend beschränkt.

Um diesen Missstand zu beseitigen, ist aus der EP 0 990 894 B1 eine verbesserte Messzelle zur Bestimmung der elektrischen Leitfähigkeit eines flüssigen Mediums bekannt geworden. Insbesondere handelt es sich bei dem flüssigen Medium um eine Kalibrierlösung für pH-Elektroden. Hier wird die Impedanz der in die Flüssigkeit eintauchenden Messzelle bei zumindest zwei Frequenzwerten einer Wechselspannung ermittelt. Aus den ermittelten Impedanzwerten werden unter Zugrundelegung eines Ersatzschaltbildes frequenzunabhängige Parameter und der Widerstandswert, aus dem die Leitfähigkeit ermittelt wird, bestimmt. Das Ersatzschaltbild besteht aus einer Parallelschaltung eines die Kapazität der Messzelle darstellenden Kondensators und eines den gesuchten Widerstand der Flüssigkeit innerhalb der Messzelle darstellenden ohmschen Widerstands sowie eines mit dem ohmschen Widerstand in Reihe geschalteten elektrischen Bauelements mit einer frequenzunabhängigen Phase. Bei jedem der zumindest zwei Frequenzwerte werden der Realteil und der Imaginärteil der Impedanz der Messzelle ermittelt. Aus den ermittelten Werten werden anschließend die frequenzunabhängigen Parameter und der gesuchte Widerstand berechnet. Anschließend erfolgt dann die Berechnung der elektrischen Leitfähigkeit.

Der Erfindung liegt die Aufgabe zugrunde, ein Durchflussmessgerät so auszugestalten, dass neben den Durchflussmesswerten eine präzise Information über die Leitfähigkeit des Mediums oder eine physikalische Veränderung an einer Messelektrode vorliegt.

Die Aufgabe wird dadurch gelöst, dass ein erstes Erregungssignal mit einer ersten Frequenz und zumindest ein zweites Erregungssignal mit einer zweiten Frequenz oder ein Erregungssignal, das zumindest zwei Frequenzen enthält, derart an die Messelektrode angelegt werden bzw. wird, dass der Mittelwert der Erregungssignale bzw. des Erregungssignals zumindest näherungsweise mit dem Mittelwert des Elektrodenpotentials der Messelektrode zusammenfällt, und dass anhand von zumindest einem zwischen Messelektrode und Referenzpotential (Masseelektrode, Erdungsring, usw.) gemessenen Impedanzwert die Leitfähigkeit des Mediums oder die Veränderung an der Messelektrode erkannt wird. Die Veränderung an der Messelektrode kann entweder durch eine Belagsbildung oder durch Korrosion hervorgerufen sein.

Bevorzugt wird als Erregungssignal eine erste Pulsfolge mit einer ersten Frequenz und eine zweite Pulsfolge mit einer zweiten Frequenz verwendet. Die beiden Pulsfolgen werden bevorzugt in zwei aufeinanderfolgenden Messzyklen - und hier bevorzugt jeweils synchron oder asynchron zum Umschalten des Magnetfeldes - an die Messelektrode angelegt. Es versteht sich von selbst, dass die beiden Messzyklen, in denen die Pulsfolgen jeweils angelegt werden, weder direkt aufeinander folgen müssen, noch dass die Pulsfolgen - wie bereits gesagt - mit der Umschaltung des Magnetfeldes synchronisiert sein müssen. Vielmehr können die Pulsfolgen sowohl synchron als auch asynchron zum Umschalten des Magnetfeldes an die Messelektrode angelegt werden. Bei der Pulsfolge handelt es sich beispielsweise um eine Folge aus rechteckförmigen Pulsen. Es können jedoch auch andere Arten von Pulsfolgen, z.B. sinusförmige Pulse, in Verbindung mit der vorliegenden Erfindung verwendet werden.

Gemäß einer alternativen Ausgestaltung des Verfahrens ist vorgesehen, dass als Erregungssignal ein Pseudo-Rauschen mit einer Vielzahl von Frequenzen, also ein Frequenzspektrum, verwendet wird. Das entsprechende Erregungs-signal wird auch als digitales weißes Rauschen bezeichnet. Wiederum weisen die einzelnen Pulse bevorzugt eine Rechteckform auf. Als weiteres Test- oder Erregungssignal kommt ein Multitonsignal in Frage, welches sich optimal an das jeweilige Messproblem anpassen lässt.

Zur Verbesserung der Messgenauigkeit hat es sich als vorteilhaft erwiesen, wenn als Erregungssignal ein Signal verwendet wird, bei dem nach der Transformation vom Zeitbereich in den Frequenzbereich die Seitenbänder stark gedämpft sind.

Gemäß einer vorteilhaften Ausgestaltung des erfindungsgemäßen Verfahrens wird folgendermaßen vorgegangen:

- in vorgegebenen Zeitabständen wird die Durchflussmessung unterbrochen und der zuletzt gemessene Durchflussmesswert wird abgespeichert bzw. eingefroren;
- bei einer ersten Unterbrechung der Durchflussmessung wird ein erstes Erregungssignal mit einer ersten Frequenz und bei einer zweiten Unterbrechung der Durchflussmessung wird ein zweites Erregungs-signal mit einer zweiten Frequenz an die Messelektrode angelegt.
- Anhand von zumindest einem ermittelten Impedanzwert wird die Leitfähigkeit bestimmt, oder es wird erkannt, ob an der Messelektrode eine Änderung aufgetreten ist.

Insbesondere ist vorgesehen, dass die optimale Frequenz und/oder der optimale Amplitudenwert der Pulsfolge, bzw. der zumindest zwei Pulsfolgen mit unterschiedlichen Frequenzen, bei denen die Impedanzwerte ermittelt werden, in Abhängigkeit von dem Medium ermittelt werden. Bevorzugt liegen die Frequenzen der Signale, die an die Messelektrode angelegt werden, zwischen 10Hz bis 10kHz. In einer Ausgestaltung werden beispielsweise vier Frequenzen ausgewählt: 60 Hz, 110 Hz, 440 Hz und 1.1 kHz. Bei der Auswahl der Frequenzen ist insbesondere darauf zu achten, dass sie nicht mit der Netzfrequenz oder der Umschaltfrequenz des Magnetfeldes übereinstimmen. Je mehr Frequenzen für die Bestimmung der Leitfähigkeit ausgewählt werden, um so genauer kann das Betragsspektrum und das Phasenspektrum der Impedanz und somit die Leitfähigkeit ermittelt werden.

Im einfachsten Fall werden nur die Realteile, also die Betragswerte der Impedanzwerte für die Bestimmung der Leitfähigkeit herangezogen. Hierzu werden sukzessive mindestens zwei Pulsfolgen mit unterschiedlichen Frequenzen an die Messelektrode angelegt. Sind die Beträge der Impedanzwerte innerhalb tolerierbarer Grenzen gleich, so wird davon ausgegangen, dass die Messung in einem Bereich erfolgt ist, in dem der Betrag des Impedanzwertes näherungsweise konstant ist und somit funktional von der Leitfähigkeit abhängt. Somit kann eine verlässliche Aussage hinsichtlich der Leitfähigkeit des Mediums getroffen werden.

Alternativ wird vorgeschlagen, dass die Frequenzen der Pulsfolge sukzessive geändert werden. Zusätzlich zu den Beträgen können weiterhin auch noch die Phasenwerte der Impedanzwerte ermittelt werden. Bei der Frequenz, bei der die Phasenverschiebung der Impedanz minimal ist, wird der korrespondie-rende Betrag des Impedanz zur Bestimmung der Leitfähigkeit herangezogen. Möglich es selbstverständlich auch, die Impedanzwerte über das gesamte Frequenz-spektrum zu ermitteln und hieraus die Leitfähigkeit und die Änderung an der Messelektrode hoch genau zu bestimmen.

Somit ist gemäß einer vorteilhaften Ausgestaltung des erfindungsgemäßen Verfahrens vorgesehen, dass bei zumindest zwei Frequenzen die Amplituden-werte oder das Amplitudenspektrum bzw. die Realteile der Impedanzwerte und die Phasenwerte oder das Phasenspektrum bzw. die Imaginärteile der entsprechenden Impedanzwerte bestimmt werden und dass anhand der Realteile und der Imaginärteile die frequenzunabhängigen Parameter, hier insbesondere n, Q und der Widerstand bzw. die Leitfähigkeit des Mediums ermittelt werden. Im Prinzip genügen hierzu - wie in der EP 0 990 894 beschrieben - zwei Messungen bei unterschiedlichen Frequenzen. Je mehr Messungen durchgeführt werden, um so geringer ist der Messfehler bei der Bestimmung der Leitfähigkeit.

Hierbei wird bevorzugt so vorgegangen, dass auf die ermittelten Impedanz-werte jeweils ein Ersatzschaltbild angewendet wird, wobei das Ersatzschaltbild aus einer Parallelschaltung eines die Kapazität der Messelektrode darstellenden Kondensators und eines den gesuchten Widerstand des Mediums zwischen Potential der Messelektrode und Bezugspotential darstellenden Ohm'schen Widerstands sowie eines mit dem Ohm'schen Widerstand in Reihe geschalteten elektrischen Bauelements Z mit einer frequenzunabhängigen Phase besteht, wobei das Bauelement Z durch folgende Impedanz beschrieben wird:

$$Z_{CPE} = \frac{1}{Q \cdot (2\pi f \cdot i)^n}$$

hierbei kennzeichnen n und Q zwei frequenzunabhängige Parameter.

Weiterhin ist gemäß einer vorteilhaften Ausgestaltung des erfindungs-gemäßen Verfahrens vorgesehen, dass in vorgegebenen Zeitabständen der Istwert des frequenzunabhängigen Parameters Q mit einem bei einem vorgegebenen Startpunkt des Durchflussmessgeräts ermittelten Sollwert von Q verglichen wird, und dass eine Änderung an der Oberfläche der Messelektrode signalisiert wird, wenn die Abweichung zwischen dem Istwert und dem Sollwert von Q einen vorgegebenen Toleranzbereich überschreitet. Die Änderung kann entweder von einer Belagsbildung an der Messelektrode oder von Korrosion an der Messelektrode herrühren.

Wie bereits gesagt, ist weiterhin vorgesehen, dass die Frequenz der Pulsfolge sukzessive geändert wird, bis der Phasenwert (Imaginärteil) der ermittelten Impedanzwerte ein Minimum erreicht, und dass bei der Frequenz der Pulsfolge, bei der der Phasenwert minimal ist, der zugehörige Amplitudenwert (Realteil) des Impedanzwertes zur Bestimmung des Widerstands bzw. zur Bestimmung der Leitfähigkeit des Mediums herangezogen wird. Bevorzugt werden die Leitfähigkeitswerte des Mediums, die der Prozessüberwachung dienen, simultan mit den Durchflussmesswerten bereitgestellt. Insbesondere ist in diesem Zusammenhang vorgesehen, dass Durchflussmesswerte während eines jeden Messzyklus' bereitgestellt werden, während die Leitfähigkeitswerte in größeren Abständen von ca. 1ms zur Verfügung stehen. Die Sensordiagnose, also insbesondere die Überwachung von Änderungen an den Messelektroden, kann in größeren Abständen erfolgen. Hier ist es sinnvoll, eine Messung des vollständigen Frequenzspektrums durchzuführen - eine Vorgehensweise, die entsprechend zeitaufwändig ist. Da sich Änderungen an der Messelektrode in einem relativ großen Zeitraum einstellen, ist es möglich, die zeitintensive Auswertung des Amplituden- und/oder Phasenspektrums hierfür einzusetzen. Eine Belagsbildung oder Korrosion an der Messelektrode lässt sich über einen Vergleich von Historiendaten gewinnen.

Die Erfindung wird anhand der nachfolgenden Figuren näher erläutert. Es zeigt:

Fig. 1: eine schematische Darstellung eines magnetisch-induktiven Durchflussmessgeräts, bei dem das erfindungsgemäße Verfahren realisiert ist,
Fig. 2: eine schematische Darstellung einer Messanordnung mit zwei parallelen Messelektroden,
Fig. 3: ein Graph, der die funktionale Abhängigkeit eines Gleichstroms i von der Klemmenspannung $E_{KI}$ zeigt, wenn die elektrische Leitfähigkeit eines Elektrolytlösung gemessen wird,
Fig. 4: eine schematische Darstellung der sich ausbildenden elektrischen Doppelschicht,
Fig. 5: eine schematische Darstellung des elektrischen Strömungsfeldes bei einer Messung mit einem magnetisch-induktiven Durchflussmessgerät zwischen Messelektrode und Masseelektrode,

Fig. 6: ein Ersatzschaltbild für die Ermittlung der Leitfähigkeit und einer physikalischen Änderung an der Messelektrode nach dem erfindungsgemäßen Verfahren,

Fig. 7 a: eine graphische Darstellung des Betragsfrequenzganges der Impedanz bei unterschiedlichen elektrischen Leitfähigkeiten des Mediums,

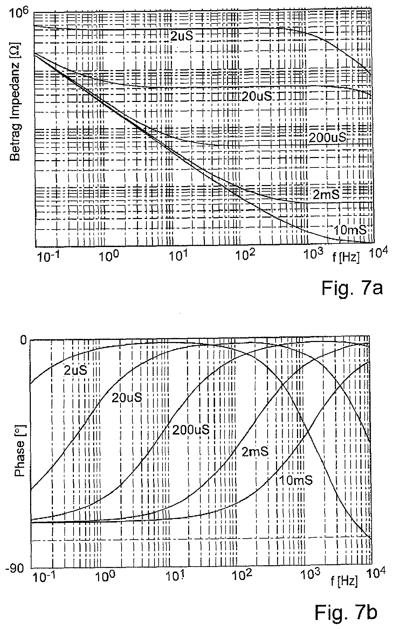

Fig. 7 b: eine graphische Darstellung des Phasenfrequenzganges der Impedanz bei unterschiedlichen elektrischen Leitfähigkeiten des Mediums,

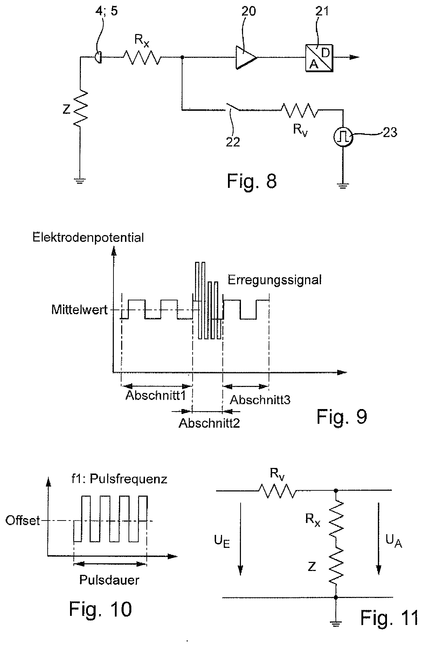

Fig. 8: eine Darstellung einer bevorzugten Schaltung zur Ausführung des erfindungsgemäßen Verfahrens,

Fig. 9: ein Diagramm, das ein Erregungssignal einer Frequenz f1 zeigt, das der Umschaltfrequenz des Magnetfeldes überlagert ist,

Fig. 10: eine Darstellung eines an die Messelektrode angelegten Erregungssignals und

Fig. 11: ein Schaltbild eines Spannungsteilers.

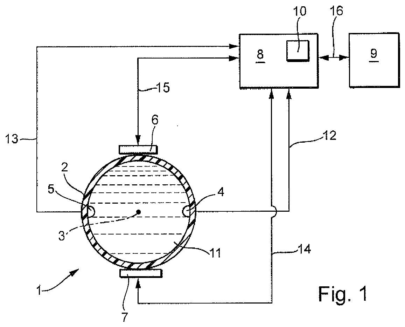

Fig. 1 zeigt eine schematische Darstellung einer Ausgestaltung der erfindungsgemäßen Vorrichtung 1. Das Messrohr 2 wird von dem Medium 11 in Richtung der Messrohrachse 3 durchflossen. Das Medium 11 ist zumindest in geringem Umfang elektrisch leitfähig.

Das Messrohr 2 ist an seiner Innenfläche mit einem Liner ausgekleidet; der Liner 18 besteht aus einem nichtleitfähigen Material, das ggf. in hohem Maße chemisch und/oder mechanisch beständig ist.

Das senkrecht zur Strömungsrichtung des Mediums 11 ausgerichtete Magnetfeld B wird über ein Magnetsystem, z.B. über zwei diametral angeordnete Spulenanordnungen 6, 7 bzw. über zwei Elektromagnete erzeugt. Unter dem Einfluss der Magnetfeldes B wandern in dem Medium 11 befindliche Ladungs-träger je nach Polarität zu den beiden entgegengesetzt gepolten Messelektroden 4, 5 ab. Die sich an den Messelektroden 4, 5 aufbauende Messspannung ist proportional zu der über den Querschnitt des Messrohres 2 gemittelten Strömungsgeschwindigkeit des Mediums 11, d. h. sie ist ein Maß für den Volumenstrom des Mediums 11 in dem Messrohr 2. Das Messrohr 2 ist übrigens über Verbindungselemente, z. B. Flansche, mit einem Rohrsystem verbunden, durch das das Medium 11 hindurchströmt.

Bei den beiden Messelektroden 4, 5 handelt es sich im gezeigten Fall um pilzförmige Messelektroden, die in direktem Kontakt mit dem Medium 11 stehen. Selbstverständlich sind in Verbindung mit der erfindungsgemäßen Lösung auch Stiftelektroden oder alle anderen bekannten Arten von Messelektroden einsetzbar.

Über Verbindungsleitungen 12, 13 sind die Messelektroden 4, 5 mit der Regel-/Auswerteeinheit 8 verbunden. Die Verbindung zwischen den Spulenanordnungen 6, 7 und der Regel-/Auswerteeinheit 8 erfolgt über die Verbindungsleitungen 14, 15. Die Regel-/Auswerteeinheit 8 ist über die Verbindungsleitung 16 mit einer Eingabe-/Ausgabeeinheit 9 verbunden. Der Auswerte-/Regeleinheit 8 ist die Speichereinheit 10 zugeordnet.

Mit dem bekannten magnetisch-induktiven Durchflussmessgerät wird erfindungsgemäß die elektrische Leitfähigkeit $\chi$ ermittelt. Grundlegend lässt sich hier Folgendes sagen: Um den Zusammenhang zwischen dem gemessenen Leitwert G und der elektrischen Leitfähigkeit $\chi$ eines homogenes Mediums herzustellen, ist es notwendig, die Geometrie der jeweiligen Messanordnung zu kennen. Die Geometrie einer Messanordnung lässt sich üblicherweise über einen konstanten Zahlenwert beschreiben, der als Zellkonstante k bezeichnet wird.

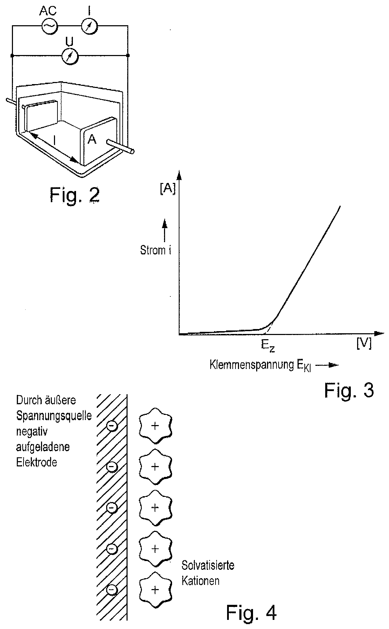

Für eine quaderförmigen Anordnung von zwei plattenförmigen Elektroden - dargestellt ist dieser Fall in der Fig. 2 - lässt sich die Leitfähigkeit $\chi$ wie folgt bestimmen:

$$\chi = \frac{l}{A} \cdot G = k \cdot G = \frac{k}{R}$$

mit:

$\chi$: elektrische Leitfähigkeit in S/cm

G, R: gemessener Leitwert in S, Widerstand in Ohm

k: Zellkonstante in 1/cm

A: Fläche einer Elektrode in $cm^2$

L: Abstand der beiden Elektroden

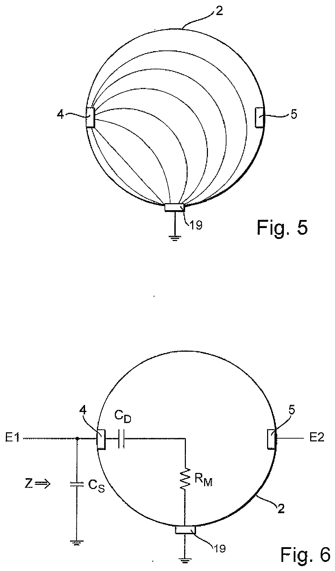

Bei anderweitige Geometrien, insbesondere bei der Geometrie, die in einem magnetisch-induktiven Durchflussmessgerät vorliegt, wird die Zellkonstante k entweder aus einer Simulation des elektrischen Strömungsfeldes oder durch Messung mit einer Eichlösung mit bekannter Leitfähigkeit ermittelt. Das Strömungsfeld bei einer Messung mit einem magnetisch-induktiven Durchflussmessgerät 1 zwischen einer Messelektrode 4; 5 und der Masseelektrode 19 ist schematisch in Fig. 5 dargestellt.

Problematisch ist hierbei, dass die Messung der elektrischen Leitfähigkeit $\chi$ einer Elektrolytlösung nicht mit einer Gleichspannung durchgeführt werden kann, da der damit verbundene Gleichstrom zu einer Entladung der Ionen an der Messelektrode führen würde, was mit einer chemischen Reaktion verbunden ist. Damit diese Reaktion überhaupt einsetzt, ist eine gewisse Mindestspannung Ez erforderlich - siehe hierzu auch Fig. 3. Diese Mindestspannung Ez ist abhängig von unterschiedlichen Größen, z.B. von dem Medium und der Temperatur. Aufgrund dieses nicht linearen Verhaltens ist eine Durchführung der Messung mit Gleichspannung nicht möglich.

Erklären lässt sich dieser Effekt dadurch, dass es zwischen Medium und Elektrolyt zur Ausbildung einer sogenannten elektrischen Doppelschicht kommt, die ein kapazitives Verhalten aufweist. Dargestellt ist dies schematisch in Fig. 4. Benutzt man anstelle der Gleichspannung jedoch eine elektrische Wechselspannung geeigneter Frequenz und Amplitude (<= 100mV), so ist es möglich, die Impedanz der Doppelschichtkapazität klein im Verhältnis zum ohmschen Widerstand des Mediums 11 zu halten.

Die elektrische Doppelschicht hat nicht das elektrische Verhalten einer idealen Kapazität, sondern kann näherungsweise mit einem Netzwerkelement beschrieben werden, das in der Elektrochemie als Constant Phase Element - CPE - bezeichnet wird.

Die komplexe Impedanz Z eines CPE ergibt sich zu

$$ Z_{CPE} = \frac{1}{Q \cdot (2\pi f \cdot i)^n} $$

wobei der frequenzunabhängige Parameter n kleiner eins ist. Bei einer idealen Kapazität ist n gleich 1 zu setzen. Der zweite frequenzunabhängige Parameter Q hat die physikalische Einheit Farad. Für n ungleich 1 kann dem Parameter Q keine physikalische Einheit zugeordnet werden. Das CPE dient als reines Beschreibungselement für die experimentell erfassten Frequenzgänge.

Ein brauchbares Ersatzschaltbild für die Leitfähigkeitsmessung mit einem magnetisch-induktiven Durchfluss-messgerät ist in Fig. 6 dargestellt. Für die Doppelschichtkapazität $C_D$ wird das CPE angenommen.

Mit dem Ersatzschaltbild wird die Leitfähigkeit und ggf. eine weitere Größe ermittelt. Bei der weiteren Größe handelt es sich z.B. um die Änderung an der mit dem Medium 11 in Kontakt stehenden Messelektrode 4; 5. Diese Änderung kann durch eine Belagsbildung oder durch Korrosion an der Oberfläche der Messelektrode 4; 5 hervorgerufen sein.

Das Ersatzschaltbild besteht aus einer zwei Zweige aufweisenden Parallelschaltung, wobei der eine Zweig von einem Kondensator mit der Streukapazität $C_S$ gebildet ist. Der andere Zweig besteht aus einer Reihenschaltung eines Widerstandes $R_M$ und des frequenzabhängigen Bauelements CPE. Bei dem Widerstand $R_M$ handelt es sich um den Ohmschen Widerstand des Mediums 11. Das Bauelement CPE repräsentiert oder simuliert hierbei die am Phasenübergang zwischen der Messelektrode 4; 5 und dem Medium 11 auftretenden Vorgänge.

Die Berechnungsformel für das Modell ergibt sich damit zu

$$ Z = \frac{\dfrac{1}{C_S \cdot 2\pi f \cdot j} \cdot \left( \dfrac{1}{Q \cdot (2\pi f \cdot i)^n} + R_M \right)}{\dfrac{1}{C_S \cdot 2\pi f \cdot j} + \dfrac{1}{Q \cdot (2\pi f \cdot i)^n} + R_M} $$

In den Figuren Fig. 7a und Fig. 7b sind der Betrags- und der Phasenfrequenz-gang bei verschiedenen Leitfähigkeiten aufgetragen. Für die Parameter wurden die folgenden Werte angesetzt, die für magnetisch-induktive Durchflussmessgeräte typisch sind:

$$ C_S = 200\,pF\,;\ Q = 8E-6\,;\ n = 0.8\,;\ k = 1/cm $$

Der Betragsfrequenzgang, der in Fig. 7a dargestellt ist, zeigt ein ausgeprägtes Plateau, das im Wesentlichen durch den Mediumswiderstand $R_M$ bestimmt ist. Diese Plateau korreliert mit einem Minimum der Phasenverschiebung.

Für die Ermittlung der Leitfähigkeit bieten sich unterschiedliche Verfahren an:

- Das Phasenminimum kann somit als eindeutiges Kriterium für eine geeignete Frequenz f für das Erregungssignal benutzt werden.
- Steht die Phaseninformation nicht zur Verfügung, so kann mittels eines Suchverfahrens eine Frequenz $f_n$ aufge-

funden und gewählt werden, in deren Umgebung sich der Betrag der Impedanz kaum ändert.

- Für eine hochgenaue Bestimmung der Leitfähigkeit ist die vollständige Identifikation des Models aus Fig. 6 erforderlich. Dazu sind mindestens zwei komplexe Impedanzmessungen (jede Messung liefert zwei unabhängige Größen) bei verschiedenen Frequenzen $f_1$, $f_2$ erforderlich, da insgesamt vier unabhängige Parameter bestimmt werden müssen : Q, n, $C_S$, $R_M$. Die Parameter Q, n und $C_S$ können für Diagnosezwecke ausgewertet werden, da sie den Zustand des Übergangssystems Messelektrode zu Elektrolyt, die Anschlusskabel für die Messelektroden, usw. widerspiegeln. Die Berechnung führt auf ein nichtlineares Gleichungssystem, welches mit bekannten numerischen Methoden gelöst werden kann.

Aus den Figuren Fig. 7a, Fig. 7b ist ersichtlich, dass zur Bestimmung einer hohen Leitfähigkeit eine hohe Frequenz erforderlich ist. Bei bekannten Leitfähigkeitsmessgeräten wird die Zellkonstante k einfach an den jeweiligen Messbereich angepasst. Bei einem magnetisch-induktiven Durchfluss-messgerät ist dies nicht möglich, da die Zellkonstante k durch das Durchflussmessgerät 1 fest vorgegeben ist. Die Bestimmung der Leitfähigkeit kann jedoch - wie bereits erwähnt - durch die Identifikation des Modells erfolgen. In diesem Zusammenhang ist es auch nicht erforderlich, die Testfrequenzen der Erregungssignale bis in den Bereich des Phasen-minimums zu schieben.

Man erkennt weiterhin anhand der Graphen aus den Figuren Fig. 7a und Fig. 7b, dass im Bereich hoher Leitfähigkeiten die Messung durch die Streukapazität $C_S$ nicht mehr beeinflusst wird. Das Model lässt sich dann zu einer Serienschaltung, bestehend aus $R_M$ und CPE, vereinfachen. Für die Impedanz ergibt sich damit:

$$Z = \frac{1}{Q \cdot (2\pi f \cdot i)^n} + R_M$$

Weiterhin kann für den Parameter n in guter Näherung der Wert 0.8 genommen werden, da dieser Wert sehr gut den aufgrund experimenteller Bestimmungen ermittelten Wert widerspiegelt. Hierbei muss jedoch einschränkend gesagt werden, dass dieser Wert von 0.8 nur gut passt, wenn die Messelektrode 4; 5 sich in einem belagsfreien Zustand befindet.

Misst man anschließend die komplexe Impedanz bei einer Frequenz f, so können die Parameter Q und $R_M$ durch Lösen eines linearen Gleichungssystems bestimmt werden.

Erfindungsgemäß wird die Leitfähigkeitsmessung bei dem magnetisch-induktiven Durchflussmessgerät 1, z.B. bei dem von der Anmelderin angebotenen und vertriebenen Promag 55, alternierend zur Duchfluss-messung betrieben. Die Leitfähigkeitsmessung soll dabei einen möglichst kurze Zeitdauer in Anspruch nehmen, damit die Durchflussmessung möglichst wenig gestört wird. Als Test- bzw. Erregungssignal werden kurze Pulsfolgen geeigneter Frequenz und Amplitude verwendet.

Eine vorteilhafte Ausgestaltung des erfindungsgemäßen Verfahrens ist in Fig. 8 dargestellt. Hierbei ist die Impedanz Z die zu bestimmende Größe. Rx ist in dieser Ausgestaltung ein technisch erforderlicher Widerstand, der dazu dient, die Anforderung zu erfüllen, dass das magnetisch-induktive Durchfluss-messgerät 1 im explosionsgefährdeten Bereich eingesetzt werden kann. Dieser Widerstand liegt in Reihe zum eigentlichen Meßobjekt Z.

Um die Leitfähigkeitsmessung durchzuführen, werden von einem Puls-generator 23 Rechteckpulse generiert, die offsetfrei auf das Elektroden-potential addiert werden. Das eigentlichen Messelektrodensignal zur Ermittlung des Durchflusses wird während der Messung mittels A/D-Wandler 21 kontinuierlich erfasst.

In Fig. 9 ist parallel zu Fig. 8 der zeitliche Ablauf schematisch dargestellt. Das Erregungs- oder Testsignal wird nur während des relativ kurzen Abschnitts 2 an die Messelektrode 4; 5 angelegt.

Bevorzugt wird die Messung in drei Abschnitte unterteilt:

1. Im Abschnitt 1 wird das Elektrodenpotential gemessen, und der aktuelle Mittelwert des Elektrodenpotentials gebildet.
2. Im Abschnitt 2 wird der Schalter 22 geschlossen und der Pulsgenerator 23 erzeugt eine rechteckförmige Pulsfolge mit einer vorgegebenen Frequenz f. Die Pulsgenerierung kann synchron oder asynchron zum Umschalten des Magnetfeldes B erfolgen. Im gezeigten Fall ist sie synchron. Die Offsetspannung des Erregungssignals wird gleich dem Mittelwert gesetzt, der in Abschnitt 1 berechnet wurde. Hierdurch wird das Elektrodenpotential durch das überlagerte Erregungssignal kaum aus dem Gleichgewicht gebracht.
3. Im Abschnitt 3 wird der Schalter 22 geöffnet, und die mittels A/D-Wandler 21 erfassten Daten werden ausgewertet.

Die Auswertung der Daten des A/D-Wandlers 21 aus Abschnitt 2 erfolgt nach folgendem Verfahren:

1. Der Datenblock wird jeweils mit einer Sinus- und Cosinus-modulierten FIR-Filterfunktion multipliziert. Die FIR-Filterfunktion kann im einfachsten Fall ein Rechteckfenster sein, was einem Vektor aus Einsen entspricht und der somit wegfällt. Über die FIR-Filterfunktion kann die Bandbreite der ausgewerteten Signale gesteuert werden. Beim Promag 55 sind schaltungstechnisch bedingt, Pulsgenerator und A/D-Umsetzer nicht synchron mit demselben Takt angesteuert. Deshalb weichen tatsächliche Sendefrequenz und tatsächlich gemessene Frequenz etwas voneinander ab. Wenn das Auswerteverfahren im Frequenzbereich zu selektiv wirkt, kommt es zu Fehlern bei der Auswertung. Somit ergibt sich für den Realteil und den Imaginärteil der Impedanz die folgenden Gleichungen:

$$\text{Re}(H_1) = \sum_{k=0}^{N-1} sig(k) \cdot \sin(2\pi \frac{f_P}{f_T} k) \cdot FIR(K)$$

$$\text{Im}(H_1) = \sum_{k=0}^{N-1} sig(k) \cdot \cos(2\pi \frac{f_P}{f_T} k) \cdot FIR(K)$$

mit: $f_P$: Pulsfrequenz
$f_T$ : Tastfrequenz A/D-Umsetzer
Re($H_1$): Realteil einer komplexen Größe H
Im(H$_1$): Imaginärteil einer komplexen Größe H
$sig(k)$ : Das gemessene Signal im Abschnitt 2
$N$ : Länge des Blocks in Anzahl Abtastpunkte
und

$$FIR(k) = 0.54 - 0.46 \cdot \cos(\pi \cdot (2 \cdot (k-1) + 1) / N)$$

ist ein sog. Hämming-Filter

2. Die komplexe Größe $H_1$ wird durch die Pulsamplitude $A_P$ und durch eine weitere frequenzabhängige komplexe Größe $H_E$, die das Übertragungsverhalten der Messelektronik beschreibt, dividiert.

$$H_2 = \frac{H_1}{A_P \cdot H_E(f_P)}$$

3. Die Impedanzen Z, Rx und Rv bilden einen Spannungsteiler. Der Spannungsteiler ist in Fig. 11 dargestellt.

$$v = \frac{Z + Rx}{Z + Rx + Rv}$$

Nach Z aufgelöst, ergibt sich somit:

$$Z = Rv \cdot \frac{v}{1-v} - Rx$$

mit $v = H_2$

4. Die Leitfähigkeit $\kappa$ des Mediums 11 kann im Rahmen der Messgenauigkeit aus dem Betrag der komplexen Impedanz nach folgender Beziehung berechnet werden.

5.

$$\chi = \frac{k}{|Z|}$$

6. Aus dem berechneten Ergebnis werden die Parameter für das Rechteckpulspaket für die nächste Messung berechnet.

Dazu wird folgende Vorgehensweise herangezogen.

1. Das Verfahren beschränkt sich auf eine kleine Anzahl an Testfrequenzen (z.B. auf 5 Frequenzen, $f_1$, ....$f_5$). Begonnen wird das Verfahren bei einer mittleren Frequenz und einer mittelgroßen Amplitude.
2. Bei dieser Frequenz ergibt sich ein erster Wert für den Mediumswiderstand $R_M$.
3. Anhand einer Tabelle, bestehend aus den Frequenzen $f_i$ und Intervallgrenzen für $R_M$, ergibt sich eine neue Testfrequenz $f_n$. Die Tabelle bildet dabei grob den Betragsfrequenzgang des angenommen Models ab.
Bei gut gewählten Intervallgrenzen konvergiert das Verfahren immer zu der geeigneten Frequenz des Erregersignals.
4. Die zu erwartende Pulsamplitude an der Impedanz Z wird über die Spannungsteilerformel berechnet, und die Amplitude des Erregersignals wird so eingestellt, dass an der Impedanz Z maximal 100mV anliegen.

Bevorzugt werden erfindungsgemäß entweder nur das Amplitudenspektrum oder das Amplitudenspektrum und das Phasenspektrum zur Ermittlung der Leitfähigkeit $\kappa$ des Mediums 11 herangezogen. Ist der Verlauf des Amplituden- und/oder des Phasenspektrums bekannt, so ist die Leitfähigkeit $\kappa$ des Mediums 11 aufgrund der funktionalen Abhängigkeit eindeutig bestimmbar. Unterschiedliche Leitfähigkeiten $\kappa$ von Medien 11 zeigen sich im wesentlichen in einer Parallelverschiebung des in Fig. 3 gezeigten Betragsspektrums in Richtung der y-Achse. Ist bekannt, in welchem Frequenzbereich das Betragsspektrum konstant ist, so lässt sich die Leitfähigkeit $\kappa$ mit hoher Genauigkeit bestimmen.

Noch genauer wird die Ermittlung der Leitfähigkeit $\kappa$, wenn zusätzlich das Phasenspektrum herangezogen wird. Hier wird so vorgegangen, dass die Leitfähigkeit $\kappa$ bei dem Amplitudenwert ermittelt wird, bei dem der Phasenwert ein Minimum aufweist.

Die Ermittlung der Leitfähigkeit $\kappa$ erfolgt im wesentlichen simultan zur Ermittlung des Durchflusses des Mediums 11 durch das Messrohr 2.

Neben der Bestimmung der Leitfähigkeit $\kappa$ kann mittels des erfindungsgemäßen Verfahrens auch eine physikalische Änderung an der Messelektrode 4; 5 erkannt werden. Hierzu wird in vorgegebenen Zeitabständen der Istwert des frequenzunabhängigen Parameters Q mit einem bei einem vorgegebenen Startzeitpunkt des Durchflussmessgeräts 1 ermittelten Sollwert von Q verglichen. Um die in Fig. 7a und Fig. 7b gezeigten Kurven möglichst genau nachzubilden und somit Q exakt zu ermitteln, werden möglichst viele Impedanzwerte bei unterschiedlichen Frequenzen bestimmt. Da Korrosion oder Belangsbildung an der Messelektrode 4; 5 üblicherweise nicht sprunghaft sondern schleichend auftreten, genügt es, die 'Predictive Maintenance' - Information in relativ großen Zeitabständen zur Verfügung zu stellen.

Treten bei der Ermittlung des aktuellen Q-Wertes Abweichungen vom Sollwert auf, die außerhalb einer vorgegebenen Toleranz liegen, so lässt sich das dahingehend interpretieren, dass an der Oberfläche der Messelektrode 4; 5 eine nicht mehr zu tolerierende Änderung aufgetreten ist. Die Änderung kann - wie bereits erwähnt - durch eine Belagsbildung an der Messelektrode 4; 5 hervorgerufen sein; es kann sich jedoch auch um eine Änderung an der Oberfläche der Messelektrode 4; 5 handeln, die durch Korrosion entsteht. Eine detektierte Änderung wird dem Bedienpersonal signalisiert. Wird ein vorgegebener Toleranzbereich überschritten, wird ein Alarm ausgelöst, da die Funktionsfähigkeit des Durchflussmessgeräts 1 nicht mehr gewährleistet ist. Somit liefert das erfindungsgemäße Verfahren neben der Zusatzinformation: Leitfähigkeit des durch das Durchflussmessgerät 1 strömenden Mediums auch Information, die im Bereich der vorausschauenden Wartung angesiedelt ist.

**Bezugszeichenliste**

1. Magnetisch-induktives Durchflussmessgerät
2. Messrohr
3. Messrohrachse
4. erste Messelektrode
5. zweite Messelektrode
6. Spulenanordnung / Elektromagnet
7. Spulenanordnung / Elektromagnet
8. Regel-/Auswerteeinheit
9. Eingabe-/Ausgabeeinheit
10. Speichereinheit
11. Medium
12. Verbindungsleitung
13. Verbindungsleitung
14. Verbindungsleitung
15. Verbindungsleitung

16. Verbindungsleitung
17. Primer bzw. Haftvermittler
18. Liner
19. Masseelektrode
20. Verstärker
21. A/D Wandler
22. Schalter
23. Pulsgenerator

**Patentansprüche**

1. 1. Verfahren zur vorausschauenden Wartung an einem magnetisch-induktiven Durchflussmessgerät und/oder Verfahren zur Bestimmung der elektrischen Leitfähigkeit eines Mediums, das ein magnetisch-induktives Durchflussmess-gerät durchströmt, wobei das magnetisch-induktive Durchflussmessgerät folgende Komponenten umfasst: ein Magnetsystem, das ein das Messrohr durchsetzendes, im wesentlichen quer zur Messrohrachse verlaufendes Magnetfeld erzeugt, zumindest zwei mit dem Medium koppelnde Messelektroden mit einem definierten Ruhepotential, die in einem im wesentlichen senkrecht zum Magnetfeld liegenden Bereich des Messrohres angeordnet sind, und eine Regel-/Auswerteeinheit, die anhand der in die Messelektroden induzierten Messspannung Information über den Volumen- oder Massestrom des Mediums in dem Messrohr liefert,
   **dadurch gekennzeichnet,**
   **dass** ein erstes Erregungssignal mit einer ersten Frequenz ($f_1$) und zumindest ein zweites Erregungssignal mit einer zweiten Frequenzen ($f_2$) oder ein Erregungssignal, das zumindest zwei Frequenzen ($f_1$, $f_2$) enthält, derart an die Messelektrode (4; 5) angelegt werden/wird, dass der Mittelwert der Erregungssignale/ des Erregungssignals zumindest näherungsweise mit dem aktuellen Mittelwert des gemessenen Elektrodenpotentials der Messelektrode (4; 5) zusammenfällt, und
   **dass** anhand von zumindest einem zwischen Messelektrode (4; 5) und Referenzpotential gemessenen Impedanzwert die Leitfähigkeit ($\chi$) des Mediums (11) und/oder eine Änderung an der Oberfläche der Messelektrode (4; 5) erkannt wird.

2. 2. Verfahren nach Anspruch 1,
   **dadurch gekennzeichnet,**
   **dass** als Erregungssignal eine erste Pulsfolge mit einer ersten Frequenz ($f_1$) und eine zweite Pulsfolge mit einer zweiten Frequenz ($f_2$) verwendet wird.

3. 3. Verfahren nach Anspruch 1,
   **dadurch gekennzeichnet,**
   **dass** als Erregungssignal ein Pseudo-Rauschen mit einer Vielzahl von Frequenzen ($f_1$, $f_2$, ...) verwendet wird.

4. 4. Verfahren nach Anspruch 1 oder 2,
   **dadurch gekennzeichnet,**
   **dass** als Erregungssignal ein Signal verwendet wird, bei dem nach der Transformation vom Zeitbereich in den Frequenzbereich die Seitenbänder stark gedämpft sind.

5. 5. Verfahren nach Anspruch 1,
   **dadurch gekennzeichnet,**
   **dass** in vorgegebenen Zeitabständen die Durchflussmessung unterbrochen wird, dass der zuletzt gemessene Durchflussmesswert abgespeichert bzw. eingefroren wird und
   **dass** bei einer ersten Unterbrechung der Durchflussmessung ein erstes Erregungssignal mit einer ersten Frequenz ($f_1$) und bei einer zweiten Unterbrechung der Durchflussmessung zumindest ein zweites Erregungssignal mit einer zweiten Frequenz ($f_2$) an die Messelektrode (4; 5) angelegt wird.

6. 6. Verfahren nach Anspruch 1,
   **dadurch gekennzeichnet,**
   **dass** die optimalen Frequenzen ($f_1$, $f_2$, ...) der Pulsfolge bzw. der Pulsfolgen, bei denen der zumindest eine Impedanzwerte ermittelt wird, in Abhängigkeit von dem Medium bestimmt wird.

7. 7. Verfahren nach Anspruch 6,

**dadurch gekennzeichnet,**

**dass** anhand der ermittelten Impedanzwerte die Leitfähigkeit des Mediums (11) ermittelt wird, wenn bei zumindest zwei aufeinanderfolgenden Pulsfolgen mit unterschiedlichen Frequenzen die Impedanzwerte innerhalb vorgegebener Toleranzbereiche gleich sind.

**8.** 8. Verfahren nach einem oder mehreren der vorhergehenden Ansprüche,
**dadurch gekennzeichnet,**
**dass** bei zumindest zwei Frequenzen ($f_1$, $f_2$) die Amplitudenwerte (oder das Amplitudenspektrum) bzw. die Realteile der Impedanzwerte und die Phasenwerte (oder das Phasenspektrum) bzw. die Imaginärteile der entsprechenden Impedanzwerte bestimmt werden und
**dass** anhand der Realteile und Imaginärteile die frequenzunabhängigen Parameter (n, Q) und der Widerstand ($R_M$) bzw. die Leitfähigkeit des Mediums ermittelt werden.

**9.** 9. Verfahren nach Anspruch 8,
**dadurch gekennzeichnet,**
**dass** auf die ermittelten Impedanzwerte jeweils ein Ersatzschaltbild angewendet wird, wobei das Ersatzschaltbild aus einer Parallelschaltung eines die Kapazität der Messelektrode (4; 5) darstellenden Kondensators (C) und eines den gesuchten Widerstand ($R_M$) des Mediums (11) zwischen dem Potential der Messelektrode (4; 5) und dem das Bezugspotential darstellenden Ohm'schen Widerstands ($R_M$) sowie eines mit dem Ohm'schen Widerstand ($R_M$) in Reihe geschalteten elektrischen Bauelements (CPE) mit einer frequenzunabhängigen Phase besteht, wobei das Bauelement (CPE) durch folgende Impedanz beschrieben wird:

$$Z_{CPE} = \frac{1}{Q \cdot (2\pi f \cdot i)^n}$$

hierbei kennzeichnen n und Q zwei frequenzunabhängige Parameter.

**10.** 10. Verfahren nach Anspruch 9,
**dadurch gekennzeichnet,**
**dass** in vorgegebenen Zeitabständen der Istwert ($Q_{Ist}$) des einen frequenzunabhängigen Parameters mit einem bei einem vorgegebenen Startpunkt des Durchflussmessgeräts (1) ermittelten Sollwert ($Q_{Soll}$) verglichen wird, und
**dass** eine Änderung an der Oberfläche der Messelektrode (4; 5) signalisiert wird, wenn die Abweichung zwischen dem Istwert ($Q_{Ist}$) und dem Sollwert ($Q_{Soll}$) einen vorgegebenen Toleranzbereich überschreitet.

**11.** 11. Verfahren nach Anspruch 7,
**dadurch gekennzeichnet,**
**dass** die Frequenz (f) der Pulsfolge sukzessive geändert wird, bis der Phasenwert der ermittelten Impedanzwerte ein Minimum erreicht, und dass bei der Frequenz der Pulsfolge, bei der der Phasenwert minimal ist, der zugehörige Amplitudenwert der Impedanzwerte zur Bestimmung des Widerstands ($R_M$) bzw. zur Bestimmung der Leitfähigkeit des Mediums (11) herangezogen wird.

**12.** 12. Verfahren nach Anspruch 11,
**dadurch gekennzeichnet,**
**dass** die Leitfähigkeit ($\chi$) des Mediums (11) simultan mit dem Durchfluss bereitgestellt wird.

**Claims**

**1.** Procedure for predictive maintenance on an electromagnetic flowmeter and/or procedure to determine the electrical conductivity of a medium that flows through an electromagnetic flowmeter, said electromagnetic flowmeter comprising the following components: a magnet system that generates a magnetic field that passes through the measuring tube and is essentially perpendicular to the measuring tube axis; at least two measuring electrodes with a defined rest potential, said electrodes being coupled with the medium and being arranged in an area of the measuring tube that is essentially perpendicular to the magnetic field, and a control/evaluation unit that delivers information about the volume flow or mass flow of the medium in the measuring tube using the measuring voltage induced in the measuring electrodes,
**characterized in that**

a first excitation signal with a first frequency ($f_1$) and at least a second excitation signal with a second frequency ($f_2$) or an excitation signal that contains at least two frequencies ($f_1$, $f_2$) is/are applied to the measuring electrode (4, 5) in such a way that the mean value of the excitation signals/excitation signal at least approximately coincides with the current mean value of the measured electrode potential of the measuring electrode (4, 5), and

**in that** the conductivity ($\lambda$) of the medium (11) and/or a change at the surface of the measuring electrode (4, 5) is detected on the basis of at least one impedance value measured between measuring electrode (4, 5) and the reference potential.

2. Procedure as claimed in Claim 1,
   **characterized in that**
   a first pulse sequence with a first frequency ($f_1$) and a second pulse sequence with a second frequency ($f_2$) is used as the excitation signal.

3. Procedure as claimed in Claim 1,
   **characterized in that**
   a pseudo-noise with a multitude of frequencies ($f_1$, $f_2$, ...) is used as the excitation signal.

4. Procedure as claimed in Claim 1 or 2,
   **characterized in that**
   a signal that is used as the excitation signal is a signal where the sidebands are significantly dampened following the transformation from the time domain to the frequency domain.

5. Procedure as claimed in Claim 1,
   **characterized in that**
   the flow measurement is interrupted in predefined time intervals, **in that** the last flow measured value to be measured is saved or frozen and
   **in that** when the flow measurement is interrupted for the first time, a first excitation signal with a first frequency ($f_1$) is applied to the measuring electrode (4, 5) and, when the flow measurement is interrupted for the second time, at least a second excitation signal with a second frequency ($f_2$) is applied to the measuring electrode.

6. Procedure as claimed in Claim 1,
   **characterized in that**
   the optimum frequencies ($f_1$, $f_2$) of the pulse sequence or sequences, where the at least one impedance value is determined, are determined depending on the medium.

7. Procedure as claimed in Claim 6,
   **characterized in that**
   using the impedance values determined, the conductivity of the medium (11) is determined if the impedance values are the same within predefined tolerance ranges for at least two consecutive pulse sequences with different frequencies.

8. Procedure as claimed in one or more of the previous claims,
   **characterized in that**
   the amplitude values (or the amplitude spectrum) or the real parts of the impedance values and the phase values (or the phase spectrum) or the imaginary parts of the corresponding impedance values are determined for at least two frequencies ($f_1$, $f_2$), and
   **in that** the parameters (n, Q) that are not dependent on the frequency, and the resistance ($R_M$) or the conductivity of the medium are determined on the basis of the real parts and imaginary parts.

9. Procedure as claimed in Claim 8,
   **characterized in that**
   an equivalent circuit is applied to the impedance values determined in each case, wherein the equivalent circuit consists of a parallel connection of a capacitor (C) representing the capacitance of the measuring electrode (4; 5) and of an Ohmic resistor ($R_M$) representing the sought resistance ($R_M$) of the medium (11) between the potential of the measuring electrode (4, 5) and the reference potential, as well of an electrical component (CPE) with a phase that is independent of the frequency, switched in series with the Ohmic resistor ($R_M$), wherein the component (CPE) is described by the following impedance:

$$Z_{CPE} = 1 / (Q \cdot (2\pi f \cdot i))^n$$

where n and Q indicate two parameters that are independent of the frequency.

10. Procedure as claimed in Claim 9,
**characterized in that**
the actual value ($Q_{Ist}$) of a parameter that is independent of the frequency is compared, in predefined intervals, with a target value ($Q_{Soll}$) determined at a predefined starting point of the flowmeter (1), and
**in that** a change at the surface of the measuring electrode (4, 5) is signaled if the deviation between the actual value ($Q_{Ist}$) and the target value ($Q_{Soll}$) exceeds a predefined tolerance range.

11. Procedure as claimed in Claim 7,
**characterized in that**
the frequency (f) of the pulse sequence is gradually changed until the phase value of the impedance values determined reach a minimum, and **in that** at the frequency of the pulse sequence at which the phase value is minimum the associated amplitude value of the impedance values is used to determine the resistance ($R_M$) or to determine the conductivity of the medium (11).

12. Procedure as claimed in Claim 11,
**characterized in that**
the conductivity ($\lambda$) of the medium (11) is provided simultaneously with the flow.

## Revendications

1. Procédé destiné à la maintenance préventive sur un débitmètre magnéto-inductif et/ou procédé destiné à la détermination de la conductivité électrique d'un produit traversant un débitmètre magnéto-inductif, le débitmètre magnéto-inductif comprenant les composants suivants : un système magnétique qui génère un champ magnétique traversant le tube de mesure et qui est pour l'essentiel perpendiculaire à l'axe du tube de mesure, au moins deux électrodes de mesure avec un potentiel de repos défini, couplées avec le produit, qui sont pour l'essentiel disposées perpendiculairement à la zone du tube de mesure située dans le champ magnétique, et une unité de régulation / d'exploitation, qui fournit, sur la base de la tension de mesure induite dans les électrodes de mesure, des informations sur le débit volumique ou massique du produit dans le tube de mesure,
**caractérisé**
**en ce qu'**un premier signal d'excitation avec une première fréquence ($f_1$) et au moins un deuxième signal d'excitation avec une deuxième fréquence ($f_2$) ou un signal d'excitation contenant au moins deux fréquences ($f_1$, $f_2$) est/sont appliqué(s) à l'électrode de mesure (4, 5) de telle sorte que la valeur moyenne des signaux d'excitation / du signal d'excitation coïncide au moins approximativement avec la valeur moyenne actuelle du potentiel mesuré de l'électrode de mesure (4, 5),
et
**en ce que** la conductivité ($\lambda$) du produit (11) et/ou une modification sur la surface de l'électrode de mesure (4, 5) sont reconnues sur la base d'au moins une valeur d'impédance mesurée entre l'électrode de mesure (4, 5) et le potentiel de référence.

2. Procédé selon la revendication 1,
**caractérisé**
**en ce qu'**est utilisée comme signal d'excitation une première suite d'impulsions avec une première fréquence ($f_1$) et une deuxième suite d'impulsions avec une deuxième fréquence ($f_2$).

3. Procédé selon la revendication 1,
**caractérisé**
**en ce qu'**est utilisé comme signal d'excitation un pseudo-bruit avec un grand nombre de fréquences ($f_1$, $f_2$, ...).

4. Procédé selon la revendication 1 ou 2,
**caractérisé**
**en ce qu'**est utilisé comme signal d'excitation un signal pour lequel les bandes latérales sont fortement atténuées après la transformation du domaine temporel en domaine fréquentiel.

**5.** Procédé selon la revendication 1,
**caractérisé**
**en ce que** la mesure de débit est interrompue à intervalles prédéfinis, en ce que la dernière valeur de débit mesurée est enregistrée ou gelée et
**en ce que**, lors d'une première interruption de la mesure de débit, est appliqué à l'électrode de mesure (4, 5) un premier signal d'excitation avec une première fréquence ($f_1$) et, lors d'une deuxième interruption de la mesure de débit, un deuxième signal d'excitation avec une deuxième fréquence ($f_2$).

**6.** Procédé selon la revendication 1,
**caractérisé**
**en ce que** les fréquences optimales ($f_1$, $f_2$) de la suite d'impulsions ou des suites d'impulsions, pour lesquelles l'au moins une valeur d'impédance est déterminée, sont déterminées en fonction du produit.

**7.** Procédé selon la revendication 6,
**caractérisé**
**en ce qu'**est déterminée, au moyen des valeurs d'impédance déterminées, la conductivité du produit lorsque, pour au moins deux suites d'impulsions consécutives avec des fréquences différentes, les valeurs d'impédance sont égales à l'intérieur de plages de tolérances prédéfinies.

**8.** Procédé selon l'une ou plusieurs des revendications précédentes,
**caractérisé**
**en ce que** pour au moins deux fréquences ($f_1$, $f_2$) les valeurs d'amplitude (ou le spectre d'amplitudes) ou les parties réelles des valeurs d'impédance et les valeurs de phase (ou le spectre de phases) ou les parties imaginaires des valeurs d'impédance correspondantes sont déterminées et
**en ce que** les paramètres (n, Q) indépendants de la fréquence et la résistance ($R_M$) ou la conductivité du produit sont déterminés sur la base des parties réelles et des parties imaginaires.

**9.** Procédé selon la revendication 8,
**caractérisé**
**en ce qu'**est appliqué sur les valeurs d'impédance déterminées respectivement un circuit équivalent, ce dernier étant constitué d'un couplage en parallèle d'un condensateur (C) représentant la capacité de l'électrode de mesure (4, 5) et d'une résistance ohmique ($R_M$) représentant la résistance ($R_M$) recherchée du produit (11) entre le potentiel de l'électrode de mesure (4, 5) et le potentiel de référence, ainsi que d'un composant électrique (CPE) avec une phase indépendante de la fréquence, couplé en série avec la résistance ohmique ($R_M$), le composant (CPE) étant décrit par l'impédance suivante :

$$Z_{CPE} = 1 / (Q \cdot (2\pi f \cdot i))^n$$

où n et Q désignent deux paramètres indépendants de la fréquence.

**10.** Procédé selon la revendication 9,
**caractérisé**
**en ce que** la valeur réelle ($Q_{Ist}$) de l'un des paramètres indépendants de la fréquence est comparée à intervalles prédéfinis avec une valeur de consigne ($Q_{Soll}$) déterminée lors d'un point initial prédéfini du débitmètre (1), et
**en ce qu'**un changement sur la surface de l'électrode de mesure (4, 5) est signalé lorsque l'écart entre la valeur réelle ($Q_{Ist}$) et la valeur de consigne ($Q_{Soll}$) dépasse une plage de tolérance prédéfinie.

**11.** Procédé selon la revendication 7,
**caractérisé**
**en ce que** la fréquence (f) de la suite d'impulsions est changée successivement jusqu'à ce que la valeur de phase des valeurs d'impédance déterminées atteigne un minimum, et en ce qu'à la fréquence de la suite d'impulsions pour laquelle la valeur de phase est minimale, la valeur d'amplitude correspondante des valeurs d'impédance est utilisée pour la détermination de la résistance ($R_M$) ou pour la détermination de la conductivité du produit (11).

12. Procédé selon la revendication 11,
**caractérisé**
**en ce que** la conductivité ($\lambda$) du produit (11) est mise à disposition simultanément avec le débit.

Fig. 1

Fig. 2

Klemmenspannung $E_{Kl}$ ——▶

Fig. 3

Durch äußere
Spannungsquelle
negativ
aufgeladene
Elektrode

Solvatisierte
Kationen

Fig. 4

Fig. 5

Fig. 6

Fig. 7a

Fig. 7b

4; 5    $R_x$    20    21

Fig. 8

Elektrodenpotential

Mittelwert

Erregungssignal

Abschnitt1

Abschnitt2

Abschnitt3

Fig. 9

f1: Pulsfrequenz

Offset

Pulsdauer

Fig. 10

$R_v$

$R_x$

$U_E$    Z    $U_A$

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10356007 B3
- EP 0336615 B1
- US 6804613 B

- EP 0990894 B1
- EP 0990894 A